# FASCICULE DE BREVET EUROPEEN

(11) **EP 1 444 452 B1**
(45) Date de publication et mention de la délivrance du brevet: **12.10.2005**
(21) Numéro de dépôt: 02803051.8
(22) Date de dépôt: 12.11.2002
(51) Int. Cl.: F16H 7/08

(54) **DISPOSITIF TENDEUR INSTRUMENTE**
MIT GERÄTEN VERSEHENE SPANNEINHEIT
INSTRUMENTED TAKE-UP UNIT

(30) Priorité: 13.11.2001 FR 0114669
(43) Date de publication de la demande: 11.08.2004
(73) Titulaire: Aktiebolaget SKF, 415 50 Göteborg (SE)
(72) Inventeur: MESSAGE, Olivier, F-37000 Tours (FR); PONSON, Frédéric, F-37230 Luynes (FR)
(74) Mandataire: Casalonga, Axel
(86) Numéro de dépôt international: PCT/FR2002/003867
(87) Numéro de publication internationale: WO 2003/042577

(56) Documents cités:
- EP-A- 0 464 404
- EP-A- 1 158 287
- WO-A-00/00756
- DE-A- 10 049 505
- US-A- 4 478 595
- US-A- 5 780 731
- US-A- 5 877 431
- PATENT ABSTRACTS OF JAPAN vol. 012, no. 437 (M-765), 17 novembre 1988 (1988-11-17) & JP 63 172052 A (NIPPON SOKEN INC), 15 juillet 1988 (1988-07-15)
- PATENT ABSTRACTS OF JAPAN vol. 012, no. 160 (M-697), 14 mai 1988 (1988-05-14) & JP 62 278352 A (MITSUBISHI MOTORS CORP), 3 décembre 1987 (1987-12-03)

## Description

La présente invention concerne un dispositif tendeur de courroie ou de chaîne prévu pour assurer une tension adéquate d'une courroie ou d'une chaîne, par exemple une courroie de distribution d'un véhicule automobile.

Un dispositif tendeur comprend en général un support fixe et une partie mobile, qui est un excentrique ou un bras oscillant, montée sur le support fixe avec une possibilité de rotation. Une poulie est montée folle sur la partie mobile par l'intermédiaire d'un palier à roulement, et est destinée à être amenée en contact avec la courroie. Un ressort exerce un effort de tension entre le support et la partie mobile, provoquant la mise en contact de la poulie avec la courroie, avec une tension adéquate de la courroie. La partie mobile est montée sur le support avec une possibilité de réglage, afin de pouvoir adapter l'effort de tension de la courroie. Pour plus de détails, on peut se référer aux documents FR 2 624 577 et FR 2 744 506 décrivant des dispositifs tendeurs.

Le dispositif tendeur de courroie doit être adapté afin de maintenir la tension de la courroie dans une certaine plage de tolérance, et ce malgré l'usure de la courroie ou les variations dimensionnelles de la courroie provoquées par exemple par des variations de température. La tension appliquée dans la courroie par le dispositif tendeur est réglée lors d'une étape de montage à l'aide de repères visuels. La tension de la courroie est vérifiée lors de procédures de maintenance.

La défaillance d'une courroie, ou d'un dispositif tendeur, peut provoquer un arrêt ou une défaillance d'un dispositif mécanique associé à ladite courroie, et en altérer la sécurité de fonctionnement. Une défaillance d'une courroie de distribution d'un moteur thermique de véhicule automobile peut provoquer instantanément de graves dommages audit moteur.

Les dispositifs tendeurs du type décrit ci-dessus ne permettent pas de prévenir une défaillance de la courroie ou du dispositif tendeur. L'imminence d'une défaillance de la courroie ou dispositif tendeur est difficile à prévoir, et peut survenir de manière brusque et inattendue.

Le document DE 100 49 505 décrit un dispositif tendeur de courroie ou de chaîne selon le préambule de la revendication 1.

La présente invention propose un dispositif tendeur de courroie ou de chaîne permettant un réglage simple et rapide de la tension de la courroie ou de la chaîne.

L'invention propose également un dispositif tendeur de courroie ou de chaîne permettant un contrôle continu de la tension de la courroie, de l'usure de la courroie, et du bon fonctionnement du dispositif tendeur.

L'invention propose encore un dispositif tendeur de courroie ou de chaîne permettant d'anticiper une défaillance de courroie ou du dispositif tendeur de courroie ou de chaîne.

Ces problèmes sont resoulus par un dispositif tendeur de courroie ou de chaîne selon la revendication 1.

Un dispositif tendeur de courroie ou de chaîne, selon un aspect de l'invention, comprend un support fixe, un équipage mobile par rapport au support fixe et destiné à être en contact avec la courroie ou la chaîne, et un actionneur apte à exercer un effort de tension permanent entre l'équipage mobile et le support fixe. Le dispositif comprend en outre un ensemble capteur de paramètres de mouvement de l'équipage mobile par rapport au support fixe.

En fonctionnement, les paramètres de mouvement de l'équipage mobile par rapport au support fixe possèdent des caractéristiques propres de mouvement, de variation de mouvement, de fréquence et d'amplitude d'oscillation. Ces caractéristiques propres sont liées au dispositif tendeur et à la courroie ou la chaîne. Une analyse des paramètres de mouvement permet de détecter l'apparition de signaux caractéristiques de défauts ou d'usure du dispositif tendeur et de la courroie ou la chaîne. A partir du signal détecté, on peut déterminer avec précision l'origine de ce signal.

L'ensemble capteur des paramètres de mouvement de l'équipage mobile par rapport au support fixe est un ensemble capteur de paramètres de déplacement angulaire. En effet, l'équipage mobile peut être monté à rotation par rapport au support fixe, un actionneur étant agencé pour exercer un moment entre l'équipage mobile et le support fixe.

Selon l'invention le dispositif tendeur comprend un élément codeur disposé sur un excentrique de travail d'un galet tendeur ou sur un palier de pivotement d'un bras, ledit élément codeur pouvant défiler à rotation devant un capteur porté par le support fixe.

Dans un mode de réalisation, l'équipage mobile comprend une poulie montée folle sur l'équipage mobile et destinée à venir en contact avec la courroie ou la chaîne.

Selon l'invention l'ensemble capteur de paramètres peut mesurer un déplacement angulaire, une vitesse de déplacement angulaire, une fréquence et/ou une amplitude de déplacement angulaire de l'équipage mobile monté à rotation par rapport au support fixe.

Avantageusement, on détermine une information de défaillance de la courroie ou du dispositif de tension en fonction de seuils de déplacement angulaire moyen. Les valeurs de seuil de déplacement angulaire moyen sont des valeurs pour lesquelles on sait qu'il convient de procéder à l'examen du dispositif tendeur, de la courroie, ou de la chaîne. On peut utiliser plusieurs seuils, un seuil servant par exemple de seuil d'alerte pour procéder à une opération de maintenance, un seuil pouvant servir de seuil de danger permettant d'anticiper une rupture dommageable par un arrêt de l'ensemble mécanique utilisant la courroie.

Avantageusement, on détermine une information de défaillance de la courroie ou du dispositif de tension en fonction de la fréquence ou de l'amplitude d'oscillation autour d'une valeur de déplacement angulaire moyen. L'étude de la fréquence de l'amplitude d'oscillation de signaux de mesure de déplacement angulaire permet de détecter et de caractériser des défauts pouvant conduire à une défaillance de la courroie ou d'un dispositif tendeur.

Avantageusement, on détermine une information de défaillance en fonction de seuils d'amplitude d'oscillation ou de fréquence d'oscillation autour d'une valeur de déplacement angulaire moyen.

La présente invention et ses avantages seront mieux compris à l'étude de la description détaillée de modes de réalisation pris à titre d'exemples nullement limitatifs et illustrés par les dessins annexés, sur lesquels :
- la figure 1 représente une vue en coupe d'un dispositif tendeur, selon un aspect de l'invention ;
- la figure 2 représente un second mode de réalisation d'un dispositif tendeur, selon un aspect de l'invention ;
- la figure 3 représente des signaux de mesure réalisés par un ensemble capteur disposé sur un dispositif tendeur ;
- la figure 4 représente une mesure d'angle réalisée par un ensemble capteur de paramètres de rotation disposé sur un dispositif tendeur pivotant ; et
- la figure 5 représente une vue en élévation d'une variante du dispositif selon la figure 2.

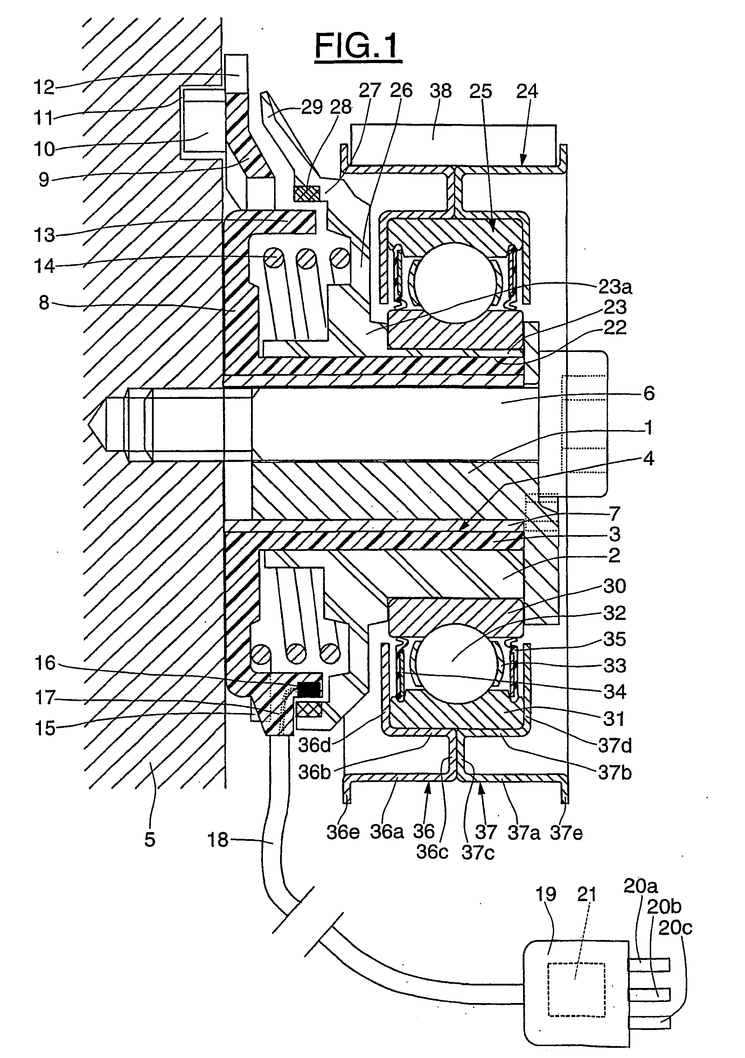

Sur la figure 1, un dispositif tendeur comprend un excentrique de réglage 1, et un équipage mobile sous la forme d'un excentrique de travail 2 monté avec possibilité de rotation sur l'excentrique de réglage 1 par l'intermédiaire d'une douille tubulaire 3 d'un support fixe 4, la douille tubulaire 3 formant palier lisse.

L'excentrique de réglage 1 est fixé sur un bloc 5 par l'intermédiaire d'une vis 6. L'excentrique de réglage 1 peut pivoter par rapport au bloc 5 lorsque la vis 6 est desserrée. Le serrage de la vis 6 provoque l'immobilisation de l'excentrique 1.

Le support 4 comprend un insert métallique cylindrique 7 disposé entre l'excentrique 1 et la douille tubulaire 3. L'insert métallique 7 et la douille tubulaire 3 sont solidarisés mutuellement par tout moyen approprié, par exemple par surmoulage de la douille tubulaire 3 sur l'insert métallique 7. Le support 4 comprend une plaque formant embase 8 sensiblement plane, se raccordant perpendiculairement à la douille tubulaire 3, et venant en appui sur le bloc 5 par l'intermédiaire de l'insert métallique 7. L'embase 8 comprend une languette 9 en saillie radiale. Un ergot 10 de blocage vient en saillie axiale dans un orifice 11 correspondant du bloc 5, à partir d'une extrémité libre de la languette 9. La languette 9 comprend également à son extrémité libre une encoche de repère 12.

Le support 4 comprend une portion axiale tubulaire 13 s'étendant à partir d'une zone de plus grand diamètre de l'embase 8, en entourant la douille tubulaire 3. Un capteur 16 est disposé dans l'extrémité libre de la portion axiale tubulaire 13 en affleurant la surface extérieure. Une portion de connexion 17, située à proximité du capteur 16, s'étend en saillie radiale à partir de la portion axiale 13. La portion de connexion 17 comprend des moyens de liaison, schématisés par des pointillés, entre le capteur 16 et une liaison filaire 18 sortant de la portion de connexion 17. L'extrémité libre de la liaison filaire 18 porte une fiche de connexion 19 à trois broches 20a, 20b, 20c. La fiche 19 porte une unité de traitement 21 représentée en pointillés.

L'excentrique de travail 2 comprend un alésage 22 monté glissant en rotation sur la douille tubulaire 3 du support 4. L'excentrique de travail 2 comprend à une extrémité opposée à la plaque-embase 8 du support 4, une surface extérieure cylindrique 23 de révolution selon un axe différent de l'axe principal de la douille 3. Une poulie 24 est montée à rotation sur la surface cylindrique 23 de l'excentrique de travail 2 par l'intermédiaire d'un palier à roulement 25.

La surface cylindrique 23 est limitée axialement par un épaulement 23a servant d'appui axial pour le palier à roulement 25. Une paroi radiale 26 s'étend radialement vers l'extérieur, en étant adjacente à l'épaulement 23a et située à distance de l'extrémité de l'excentrique de travail 2 du côté de la plaque embase 8. Le bord libre de la paroi radiale 26 se situe axialement à proximité de l'extrémité libre de la paroi axiale 13 du support 4.

Une jupe tubulaire 27 s'étend axialement à partir de la zone de plus grand diamètre de la paroi radiale 26, en entourant radialement l'extrémité libre de la portion axiale 13. La jupe 27 porte un anneau codeur 28 affleurant sa surface intérieure 27a, et situé en regard du capteur 16 porté par la portion axiale cylindrique 13. Une saillie 29 s'étend radialement à partir de la surface extérieure de la jupe 27, pour servir de repère visuel correspondant à l'encoche 12 de la languette 9.

L'anneau codeur 28 est un anneau magnétique multipolaire. Le capteur 16 sera selon le cas un capteur à effet Hall, ou un capteur passif sous la forme d'un bobinage intégré dans un concentrateur de flux coopérant au moyen de dents avec un anneau magnétique multipolaire.

Le palier à roulement 25 comprend une bague intérieure 30, une bague extérieure 31, des éléments roulants 32 disposés entre des chemins de roulement des bagues intérieure 30 et extérieure 31, et maintenus circonférentiellement espacés par une cage 33. Des organes d'étanchéité 34, 35, situés de part et d'autre des éléments roulants 32, sont du type comprenant un insert métallique de rigidification et une partie souple comprenant un bourrelet de fixation logé dans une rainure correspondante d'une bague et portant une lèvre venant en contact avec une surface de l'autre bague. Les organes d'étanchéité 34, 35 permettent d'assurer l'étanchéité de l'espace compris radialement entre les bagues intérieure 30 et extérieure 31, et où se situent les éléments roulants 32.

La poulie 24 comprend deux demi-poulies 36, 37, comprenant chacune une paroi cylindrique extérieure 36a, 37a destinée à venir en contact avec une courroie, non représentée sur la figure, une paroi cylindrique intérieure 36b, 37b en contact avec la surface extérieure d'une bague extérieure 28 du palier à roulement 25. Les parois cylindriques extérieures 36a, 37a et intérieures 36b, 37b sont reliées par des portions d'âmes radiales 36c, 37c. Les demi-poulies 36, 37 sont solidarisées par fixation mutuelle des âmes radiales 36c, 37c, au moyen d'ergot, ou de points de soudure.

Chaque demi-poulie 36, 37 comprend un flanc 36d, 37d s'étendant radialement vers l'intérieur à partir du bord libre de la portion cylindrique intérieure 36b, 36c, en masquant les organes d'étanchéité 34, 35. Les flancs 36d, 37d servent de maintien axial de la poulie 24 sur la bague extérieure 31 et de protection des organes d'étanchéités 34, 35 contre la projection d'éléments extérieurs. Les demi-poulies 36, 37 comprennent encore des bordures radiales de centrage 36e, 37e s'étendant vers l'extérieur à partir du bord libre des parois cylindriques extérieures 36a, 37a. Les bordures radiales de centrage 36e, 37e permettent le guidage d'une courroie 38 en contact avec la poulie 24.

Un ressort hélicoïdal de tension 14 est disposé entre la plaque-embase 8 et la paroi radiale 26, en entourant la douille tubulaire 3 et une extrémité de l'excentrique de travail 2 recouvrant la douille tubulaire 3. Le ressort 14 est situé dans un logement limité axialement par l'embase 8 et la paroi radiale 26, et radialement par la douille tubulaire 3 et la paroi axiale 13. Une extrémité 15 du ressort 14 est recourbée vers l'extérieur pour coopérer avec des moyens de retenue circonférentielle de l'embase 8. L'autre extrémité du ressort 14 coopère de façon similaire avec la paroi radiale 26. Le ressort hélicoïdal 14 est donc apte à exercer un couple entre le support 4 et l'excentrique de travail 2 monté à rotation sur ce dernier.

Lors du montage du dispositif tendeur de courroie, une première étape consiste à régler la tension de la courroie 38. Pour ce faire, on desserre la vis 6, de façon que l'excentrique de réglage 1 est mobile en rotation par rapport au bloc 5, et au support 4. On fait pivoter au moyen d'une clef de manoeuvre l'excentrique de réglage 1 dans le support 4 qui est immobilisé en rotation par rapport au bloc 5 grâce à l'ergot 10. On amène ainsi la poulie 24 en contact avec la courroie 38. On poursuit la rotation de l'excentrique de réglage 1, ce qui, par réaction de la courroie 38 sur la poulie 24, provoque la rotation de l'excentrique de travail 2 par rapport au support 4 avec augmentation de la tension du ressort hélicoïdal 14, qui exerce un couple résistant entre le support 4 et l'excentrique de travail 2 tendant à repousser en permanence la poulie 24 contre la courroie 38.

Le dispositif est conçu pour qque la poulie 24 exerce sur la courroie 38 un effort générant une tension adéquate dans ladite courroie 38 lorsque la saillie 29 de l'excentrique de travail 2 vient en regard de l'encoche 12 du support 4. Dans cette position, on serre la vis 6 de façon que l'excentrique de réglage 1 est immobilisée, par rapport au support 4 et par rapport au bloc 5. L'insert métallique 7 permet de reprendre les efforts axiaux de serrage exercés par la vis 6.

Le ressort hélicoïdal 14 exerce un couple correspondant au déplacement angulaire entre le support 4 et l'excentrique de travail 2. Ce couple de tension permet d'exercer un effort de tension de la courroie en contact avec la poulie 24.

La jupe 27 forme un passage étroit avec la paroi axiale 13, pour réaliser une étanchéité du logement du ressort hélicoïdal 14. Par ailleurs, la formation d'un passage étroit permet de protéger l'espace situé entre la portion axiale 13 et la jupe 27 de l'intrusion d'éléments extérieurs polluants, qui pourraient perturber les mesures réalisées par l'ensemble capteur formé par l'anneau codeur 38 et le capteur 16.

Bien entendu, la portion axiale 13 peut porter sur son extrémité libre une pluralité de capteurs 16, disposés par exemple de façon décalée circonférentiellement, afin de pouvoir transmettre des signaux possédant un déphasage non nul lorsque le codeur défile à rotation en regard desdits capteurs.

De préférence, le support 4 est en matière synthétique, obtenu par moulage ou par injection. Bien entendu, on peut prévoir un support réalisé en tôle emboutie, permettant de s'affranchir de l'utilisation d'un insert métallique 7.

En fonctionnement, lorsque la poulie 24 est entraînée en rotation par la courroie, l'ensemble capteur permet de récupérer des signaux correspondant aux paramètres de rotation de l'excentrique de travail 2 par rapport au support 4. En particulier, on peut récupérer des mesures de déplacement angulaire, de vitesse déplacement angulaire, de fréquence et d'amplitude d'oscillation de l'excentrique de travail 2. Ces signaux possèdent des composantes caractéristiques des éléments mécaniques en liaison avec l'excentrique de travail 2, c'est-à-dire le ressort 14, le palier à roulement 25, et la courroie, ainsi que des éléments distants en contact avec la courroie. On retrouvera éventuellement des composantes caractéristiques de l'engrènement de la courroie crantée avec une poulie d'entraînement dentée. Une analyse des signaux fournis par le capteur 16 peut permettre de déterminer une information de tension de la courroie, une information d'usure ou de défaillance de la courroie, une information de variations dimensionnelles de la courroie liées à la température, ou une information de défaillance du dispositif tendeur ou d'un organe particulier.

Le ressort 14 maintient grâce au couple qu'il exerce un effort d'appui permanent de la poulie 24 contre la courroie 38. Il existe une relation entre les variations de tension de la courroie, l'usure de la courroie et les déplacements angulaires moyens lents ou les déplacements angulaires instantanés rapides entre l'excentrique de travail 2 et le support fixe 4. La valeur du déplacement angulaire moyen entre l'excentrique de travail 2 et le support 4 permet donc de retrouver une information de tension de la courroie. Par déplacement angulaire moyen on entend un déplacement angulaire moyen sur une période de temps réduite, permettant de détecter des mouvement lents de l'excentrique de travail 2 par rapport au support 4, en s'affranchissant des phénomènes vibratoires. On peut également étudier les déplacements angulaires rapides et faibles d'oscillation de l'excentrique de travail 2 par rapport au support 4. Les caractéristiques vibratoires de la courroie sont différentes selon l'usure de la courroie, et notamment en cas de risque de défaillance proche de la courroie. En connaissant les caractéristiques vibratoires critiques de la courroie, il est possible de déterminer les caractéristiques critiques correspondantes de déplacement angulaire de l'excentriques de travail 2. On peut alors déterminer pour l'excentrique de travail 2 des seuils de déplacement angulaire, de vitesse de déplacement angulaire, de fréquence et d'amplitude d'oscillation de déplacement angulaire, qui constituent des seuils d'alerte d'usure de la courroie, ou de défaillance du dispositif tendeur.

Par ailleurs, on peut également utiliser les mesures fournies par le capteur 16 lors du montage du dispositif tendeur, pour régler la tension de la courroie, ou pour contrôler la tension de la courroie lors d'opération de maintenance du dispositif tendeur. La présence de repères visuels de réglage, encoche 12 et saillie 29, n'est plus indispensable.

La fiche 19 porte une unité de traitement 21 qui permet de réaliser un pré-traitement des signaux provenant du capteur 16. L'unité de traitement 21 peut comprendre un programme stocké dans des moyens mémoire et apte à être exécuté par un microprocesseur, le programme comprenant un module de réception des mesures fournies par le capteur 16, et un module de traitement des signaux reçus pour fournir en sortie une information d'usure de la courroie, de défaillance de la courroie ou du dispositif tendeur. Ces informations pourront alors être directement utilisées en vue d'un arrêt du dispositif en cas de seuil d'alerte dépassé. Par exemple, dans le cas d'un véhicule automobile, la détection d'une défaillance proche de la courroie de distribution du moteur grâce à un dispositif tendeur instrumenté suivant l'invention pourra provoquer le déclenchement d'une alerte visuelle (voyant lumineux sur le tableau de bord) ou sonore avertissant le conducteur d'un problème potentiel.

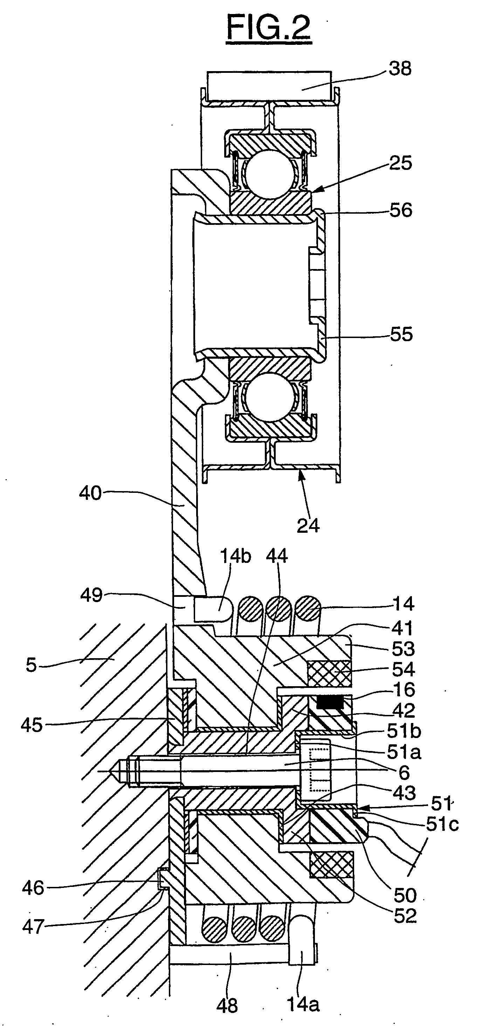

Sur la figure 2, les références semblables à la figure 1 ont été reprises. Le dispositif tendeur comprend un bras oscillant 40 avec agencée à une extrémité une poulie 24 et à l'extrémité opposée un palier de pivotement 41 entouré radialement par un ressort de tension 14. Le palier ou moyeu de pivotement 41 est monté à rotation sur une pièce intérieure fixe 42 servant d'axe par l'intermédiaire d'une coupelle 43 formant palier lisse. La pièce intérieure fixe 42 est fixée sur le bloc 5 par l'intermédiaire d'une vis 6 traversant un alésage 44 de la pièce intérieure fixe 42. La pièce intérieure fixe 42 est en appui sur le bloc 5 par l'intermédiaire d'une plaquette 45 comprenant un téton d'arrêt 46 s'engageant dans une encoche 47 du bloc 5 et un saillant de retenue 48 fixant la première extrémité 14a du ressort hélicoïdal 14. L'extrémité opposée 14b du ressort hélicoïdal 14 s'engage dans un trou 49 du bras oscillant 40. Le ressort hélicoïdal 14 est précontraint de façon à exercer un couple de rappel tendant à ramener en permanence la poulie 24 en contact avec la courroie 38.

Un bloc capteur 50, sous la forme d'une couronne, est fixé sur l'extrémité libre de la pièce intérieure fixe 42 par l'intermédiaire d'une coupelle de maintien 51 comprenant une portion radiale 51a coincée entre une paroi radiale d'extrémité de la pièce intérieure fixe 42 et une tête 6a de la vis 6a. Une paroi tubulaire 51b s'étend axialement du côté opposé à la pièce intérieure fixe 42, une paroi radiale 51c s'étendant vers l'extérieur à partir de l'extrémité libre de la paroi tubulaire 51b. Le bloc capteur 50 est disposé sur la surface extérieure de la paroi axiale 51b, en étant maintenu entre un épaulement radial 52 de la pièce intérieure fixe 42 et la paroi radiale 51c. Un capteur 16 disposé dans le bloc capteur 50 affleure la surface extérieure du capteur 50. Le palier de pivotement 41 comprend une extrémité 53 entourant radialement le bloc capteur 50, et portant un anneau codeur 54 affleurant sa surface intérieure, en regard du capteur 16.

La poulie 24 est montée à rotation sur le bras oscillant par l'intermédiaire du palier à roulement 25 dont la bague intérieure 31 est emmanchée sur un manchon tubulaire 55 en tôle emboutie solidaire de l'extrémité du bras oscillant 40 et déformé pour comprendre un bourrelet radial 56 de maintien axial de la bague intérieure 31, en appui axial du côté opposé contre l'extrémité du bras oscillant 40.

Le fonctionnement de ce dispositif tendeur est voisin de celui du dispositif tendeur illustré par la figure 1 et n'est pas repris en détail.

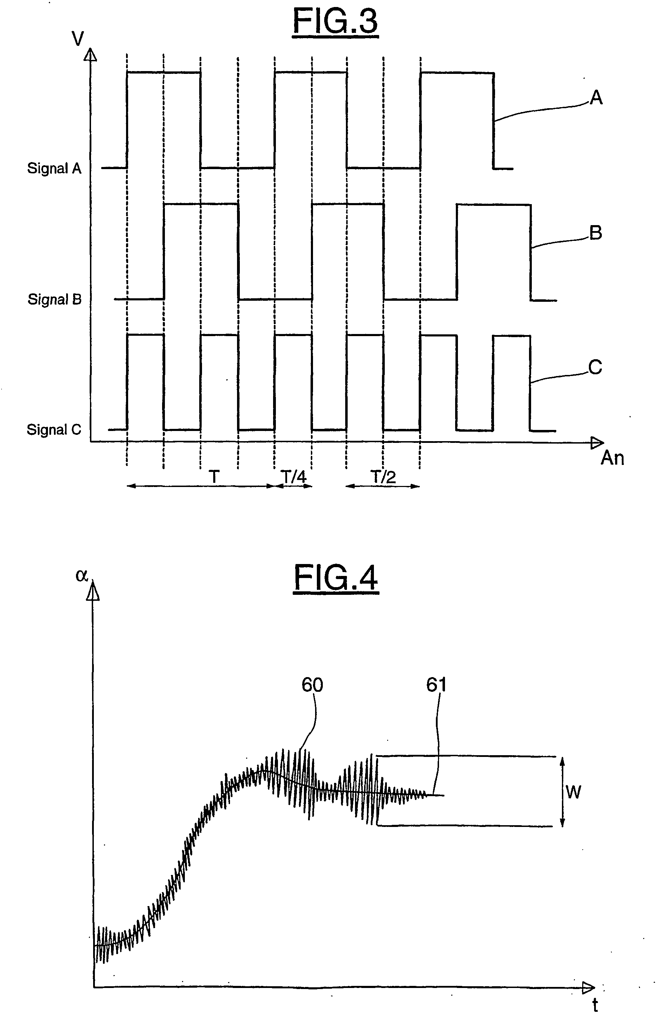

Sur la figure 3, on a représenté des signaux fournis par des capteurs disposés sur un dispositif tendeur selon les modes de réalisation des figures 1 et 2, et décalés circonférentiellement de manière à fournir un signal déphasé d'une demi-période.

Sur un graphique, on a reporté en abscisses la vitesse angulaire An et en ordonnées la tension V du signal fournie par les capteurs. Un premier signal A est un signal en créneaux de période T prenant les valeurs zéro ou un. Le signal B est un signal en créneaux similaire au signal A, et décalé d'un quart de période T/4. A partir de ces deux signaux, on dérive un signal C en créneaux valant à un instant donné un si les signaux A et B possèdent une valeur différente, et zéro si ils possèdent la même valeur. On obtient un signal C de période égale à la période du signal A ou du signal B divisée par deux, soit T/2. On obtient ainsi un signal résultant possédant une meilleure résolution à partir de signaux fournis par chaque capteur.

La valeur de la période T est représentative de la vitesse angulaire instantanée de l'équipage mobile par rapport au support fixe. Un compteur d'impulsion permet à partir du signal C de connaître le déplacement angulaire et donc la position angulaire de l'équipage mobile par rapport au support fixe. Par ailleurs, le signe du déphasage mesuré entre les signaux A et B permet de connaître le sens de rotation de l'équipage mobile par rapport au support fixe.

Sur la figure 4, on a représenté un signal pouvant être dérivé des signaux de mesure des capteurs 16. Sur un graphique, on a reporté en abscisses le temps t et en ordonnées la valeur du déplacement angulaire α entre un excentrique de travail ou un bras oscillant et un support fixe. Un premier signal 60 est représenté par une courbe continue accidentée. Le signal 60 oscille autour d'un signal moyen 61 de position dite « moyenne » matérialisée par une courbe lisse. Instantanément, le signal 60 oscille autour du signal moyen 61 avec une amplitude W. De même, le signal 60 possède instantanément une certaine fréquence d'oscillation autour du signal moyen 61.

A partir des signaux 60 et 61, on peut obtenir un angle de rotation, un angle de rotation moyen, une vitesse de rotation, une fréquence et une amplitude d'oscillation. Un traitement du signal 60 permet de retrouver les fréquences et les amplitudes des signaux multiples composant le signal 61 issu du capteur 16. L'analyse de l'évolution de ces paramètres de mouvement entre l'équipage mobile et le support fixe permettent de détecter une éventuelle défaillance, une usure de la courroie, ou une rupture proche.

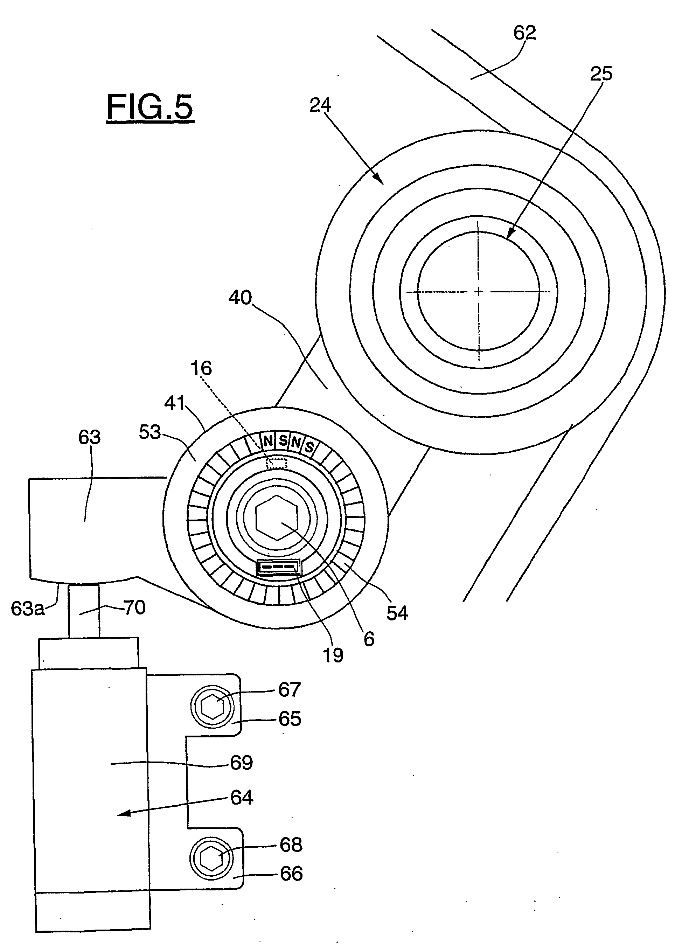

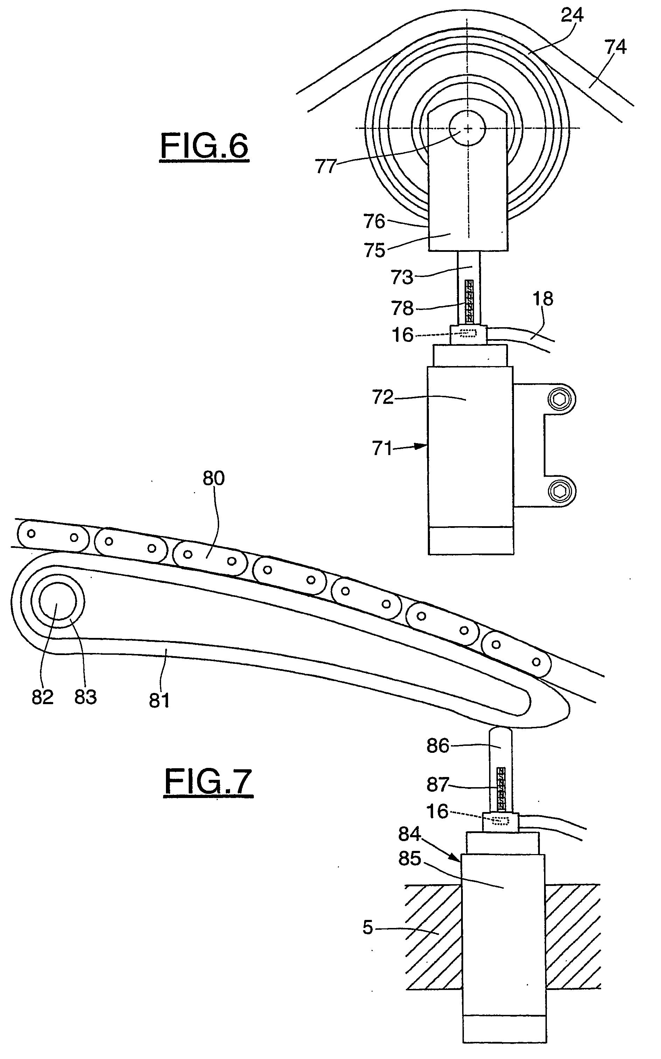

Sur la figure 5, on a représenté une variante d'un dispositif tendeur selon la figure 2. La poulie 24 est en contact avec une courroie 62 dont seule une portion a été représentée. L'anneau codeur 54 est un anneau magnétique multipolaire représenté par une alternance circonférentielle de pôle nord et de pôle sud. Le capteur 16 est représenté en pointillés, noyé dans le bloc capteur 50, fixé sur la pièce intérieure 42 par l'intermédiaire de la vis 6 dont la tête de vis 6a est visible. Le bloc 50 porte une fiche 19 à trois broches, diamétralement opposée au capteur 16.

Un bras d'appui 63, solidaire du palier de pivotement 41, s'étend en saillie radiale. Un poussoir hydraulique ou pneumatique 64, fixé sur le bloc par l'intermédiaire de pattes 65, 66 et de vis 67, 68, comprend un corps 69 et une tige de force 70. La tige de force 70 vient en appui sur une surface de contact correspondante 63a du bras d'appui 63. La tige 70 exerce un effort de tension sur la surface 63a, selon un axe ne passant pas par l'axe de rotation du bras oscillant 40 par rapport à la pièce intérieure fixe 42. Ainsi, le poussoir 64 permet d'exercer un effort provoquant la rotation du bras oscillant 40 en vue de la tension adéquate de la courroie 62.

La surface de contact 63a possède un profil adapté, permettant un contact perpendiculaire avec l'extrémité 70a de la tige 70, pour permettre une transmission adéquate de l'effort axial en autorisant un glissement de la surface de contact 63a sur l'extrémité radiale 70a de la tige 70.

Grâce à l'invention, on obtient un dispositif tendeur de courroie instrumenté permettant, par traitement des signaux issus de capteurs des paramètres de mouvement d'un équipage mobile par rapport à un support fixe, de pouvoir détecter des informations d'usure, ou de rupture proche d'une courroie. Les informations permettent également de pouvoir régler initialement ou lors d'opérations de maintenance la tension de la courroie.

Par ailleurs, l'analyse et le traitement des signaux de mesure peuvent également permettre de détecter une défaillance du dispositif tendeur lui-même, et même une défaillance d'éléments mécaniques distants d'entraînement de la courroie. Le dispositif tendeur instrumenté permet un contrôle continu de la courroie et de sa tension. Le dispositif tendeur instrumenté peut être réalisé de façon simple, avec un coût de fabrication réduit.

## Revendications

1. Dispositif tendeur de courroie ou de chaîne, comprenant un support fixe (4), un équipage mobile (2) par rapport au support fixe et destiné à être en contact avec la courroie ou la chaîne, un actionneur (14) apte à exercer un effort de tension permanent entre l'équipage mobile (2) et le support fixe (4), et un ensemble capteur de paramètres de déplacement angulaire de l'équipage mobile par rapport au support fixe, comprenant un élément codeur (28) disposé sur un excentrique (2) de travail d'un galet tendeur ou sur un palier (41) de pivotement d'un bras (40), ledit élément codeur (28) pouvant défiler à rotation devant un capteur (16) porté par le support fixe (4) et monté en regard dudit élément codeur, **caractérisé par le fait que** l'élément codeur est un anneau codeur magnétique multipolaire radialement en regard du capteur, et **par le fait que** l'ensemble capteur de paramètres peut mesurer un déplacement angulaire, une vitesse de déplacement angulaire, une fréquence et/ou une amplitude déplacement angulaire de l'équipage mobile par rapport au support fixe.

2. Dispositif selon la revendication 1, **caractérisé par le fait que** le support fixe (4) comprend une portion axiale (13) sur laquelle est disposé le capteur (14), l'équipage mobile (2) étant pourvu d'une jupe (27) entourant radialement l'extrémité libre de la portion axiale et comprenant l'élément codeur disposé en regard du capteur, ladite jupe formant, avec ladite portion axiale, un passage d'étanchéité.

3. Dispositif selon la revendication 1 ou 2, **caractérisé par le fait que** l'équipage mobile (2) comprend une poulie (24) montée à rotation sur l'équipage mobile et destinée à venir en contact avec la courroie ou la chaîne.

4. Dispositif selon l'une quelconque des revendications précédentes, **caractérisé par le fait qu'**il comprend un module de réception de signaux, et un module de traitement des signaux réceptionnés apte à fournir une information de tension de la courroie ou de défaillance.

5. Dispositif selon la revendication 4, **caractérisé par le fait que** le module de traitement détermine une information de tension de la courroie à partir d'une valeur de déplacement angulaire moyen.

6. Dispositif selon la revendication 5, **caractérisé par le fait que** le module de traitement détermine une information de défaillance de la courroie ou du dispositif de tension en fonction de seuils de déplacement linéaire moyen ou de déplacement angulaire moyen.

7. Dispositif selon l'une quelconque des revendications 4 à 6, **caractérisé par le fait que** le module de traitement détermine une information de défaillance de la courroie ou du dispositif de tension en fonction de la fréquence ou de l'amplitude d'oscillation autour d'une valeur de déplacement angulaire moyen.

8. Dispositif selon la revendication 7, **caractérisé par le fait que** le module de traitement détermine une information de défaillance en fonction de seuils d'amplitude d'oscillation ou de fréquence d'oscillation autour d'une valeur de déplacement angulaire moyen.

## Patentansprüche

1. Riemen- oder Kettenspanneinrichtung, zu der gehören: ein feststehender Träger (4), ein gegenüber dem feststehenden Träger bewegliches Element (2), das dazu bestimmt ist, mit dem Riemen oder der Kette in Berührung zu kommen, ein Betätigungselement (14), das eingerichtet ist, um eine ständige Spannkraft zwischen dem beweglichen Element (2) und dem feststehenden Träger (4) auszuüben, und eine Messeinrichtung zum Erfassen der Winkeländerung des beweglichen Elements gegenüber dem feststehenden Träger, der ein Impulserzeugerelement (28) aufweist, das auf einem Arbeitsexzenter (2) einer Spannrolle oder auf einem Drehgelenklager (41) eines Arms (40) angeordnet ist, wobei das Impulserzeugerelement (28) in der Lage ist, drehend vor einem Aufnehmer (16) vorbeizulaufen, der durch den feststehenden Träger (4) getragen und dem Impulserzeugerelement gegenüber angebracht ist, **dadurch gekennzeichnet, dass** das Impulserzeugerelement ein mehrpolig magnetisierter Impulsgeberring ist, der dem Aufnehmer in radialer Richtung gegenüber angeordnet ist, und dass die Messeinrichtung in der Lage ist, eine Winkeländerung, eine Geschwindigkeit einer Winkeländerung, eine Frequenz und/oder eine Amplitude einer Winkeländerung des beweglichen Elements gegenüber dem feststehenden Träger zu messen.

2. Einrichtung nach Anspruch 1, **dadurch gekennzeichnet, dass** der feststehende Träger (4) einen axialen Abschnitt (13) aufweist, auf dem der Aufnehmer (14) angeordnete ist, wobei das bewegliche Element (2) mit einem Kragen (27) versehen ist, der das freie Ende des axialen Abschnitts in radialer Richtung umgibt und der das dem Aufnehmer gegenüber liegend angeordnete Impulserzeugerelement enthält, wobei der Kragen mit dem axialen Abschnitt eine Spaltdichtung bildet.

3. Einrichtung nach Anspruch 1 oder 2, **dadurch gekennzeichnet, dass** das bewegliche Element (2) eine Riemenscheibe (24) aufweist, die drehbar an dem beweglichen Element befestigt ist und dazu bestimmt ist, mit dem Riemen oder der Kette in Berührung zu kommen.

4. Einrichtung nach einem der vorhergehenden Ansprüche, **dadurch gekennzeichnet, dass** diese ein Signalempfangsmodul und ein Modul zur Verarbeitung von empfangenen Signalen aufweist, die geeignet sind, um eine Information über die Spannung des Riemens oder einen Ausfall zu liefern.

5. Einrichtung nach Anspruch 4, **dadurch gekennzeichnet, dass** das Verarbeitungsmodul eine Information über die Riemenspannung anhand eines Wertes einer durchschnittlichen Winkeländerung ermittelt.

6. Einrichtung nach Anspruch 5, **dadurch gekennzeichnet, dass** das Verarbeitungsmodul eine Information über einen Ausfall des Riemens oder der Spanneinrichtung anhängig von Schwellwerten einer durchschnittlichen linearen Veränderung oder einer durchschnittlichen Winkeländerung ermittelt.

7. Einrichtung nach einem der Ansprüche 4 bis 6, **dadurch gekennzeichnet, dass** das Verarbeitungsmodul eine Information über einen Ausfall des Riemens oder der Spanneinrichtung abhängig von der Frequenz oder der Amplitude der Schwingung um einen Wert einer durchschnittlichen Winkeländerung ermittelt.

8. Einrichtung nach Anspruch 7, **dadurch gekennzeichnet, dass** das Verarbeitungsmodul eine Ausfallmeldung abhängig von Schwellwerten der Amplitude der Schwingung oder der Frequenz der Schwingung um einen Wert einer durchschnittlichen Winkeländerung ermittelt.

## Claims

1. Belt- or chain-tensioning device, comprising a fixed bracket (4), a moving element (2) relative to the fixed bracket and intended to be in contact with the belt or the chain, and an actuator (14) fit for exerting a permanent tension force between the moving element (2) and the fixed bracket (4), and a sensor unit for parameters of angular displacement of the moving element relative to the fixed bracket, comprising a coder element (28) disposed on a working cam (2) of a tensioning roller or on a pivot bearing (41) for an arm (40), said coder element (28) being able to rotate past a sensor (16) borne by the fixed bracket (4) and mounted facing said coder element **characterized in that** the coder element is a multipolar magnetic coder ring radially facing the sensor, and **in that** the parameter sensor circuit can measure an angular displacement velocity, a frequency and/or an amplitude of angular displacement of the moving element relative to the fixed bracket.

2. Device according to Claim 1, **characterized in that** the fixed bracket (4) comprises an axial portion (13) on which the sensor (14) is provided, the moving element (2) being provided with a skirt (27) radially surrounding the free end of the axial portion and comprising the coder element arranged facing the sensor, said skirt forming, with said axial portion, a sealing passage.

3. Device according to either of Claims 1 and 2, **characterized in that** the moving element (2) comprises a pulley (24) rotation-mounted on the moving element and intended to come into contact with the belt or the chain.

4. Device according to any one of the preceding claims **characterized in that** it comprises a module for receiving signals, and a module for processing received signals, which module is fit for furnishing a belt-tension record or a failure record and mounted facing said coder element, **characterized in that** the coder element is a multipolar magnetic coder ring radially facing the sensor, and **in that** the parameter sensor unit can measure an angular displacement, an angular displacement velocity, a frequency and/or an amplitude of angular displacement of the moving element relative to the fixed bracket.

5. Device according to Claim 4, **characterized in that** the processing module determines a belt-tension record from a value of mean angular displacement.

6. Device according to Claim 5, **characterized in that** the processing module determines a record of failure of the belt or of the tension device as a function of thresholds of mean linear displacement or mean angular displacement.

7. Device according to any one of Claims 4 to 6, **characterized in that** the processing module determines a record of failure of the belt or of the tension device as a function of the frequency or amplitude of oscillation about a mean angular displacement value.

8. Device according to Claim 7, **characterized in that** the processing module determines a record of failure as a function of thresholds of amplitude of oscillation or of frequency of oscillation about a mean angular displacement value.
